# EUROPEAN PATENT SPECIFICATION

(11) **EP 0 364 202 B1**
(45) Date of publication and mention of the grant of the patent: **23.08.1995**
(21) Application number: 89310328.3
(22) Date of filing: 10.10.1989
(51) Int. Cl.: A01N 57/20, A01N 25/30

(54) **Herbicide composition**
Herbizide Zusammensetzung
Composition herbicide

(30) Priority: 13.10.1988 AU 948/88
(43) Date of publication of application: 18.04.1990
(73) Proprietor: ICI AUSTRALIA LIMITED, Melbourne Victoria 3001 (AU)
(72) Inventor: Heath, Roger Palmerston, Eltham Vic, 3095 (AU)
(74) Representative: Ricks, Michael James

(56) References cited:
- EP-A- 0 077 167
- EP-A- 0 220 902
- EP-A- 0 230 598
- DE-A- 3 636 994
- US-H- 224
- CENTRAL PATENTS INDEX, BASIC ABSTRACTS JOURNAL, SECTION C, AGDOC, 21st August1985, AN=85-156869/26, Derwent Publications Ltd, London, GB; & JP-A-60 089 402 (YOSHITOMI) 20-05-1985
- HAPPI, April 1992, page 100-8

## Description

This invention relates to a herbicide composition, and more particularly to a herbicide composition comprising an N-(phosphonomethyl)-glycine-type herbicide.

N-(phosphonomethyl)glycine-type herbicides have been commercially available for some years now. The mono(isopropylammonium) salt has enjoyed particular success, but other salts such as the trimethylsulphonium salt are also effective.

Herbicide compositions incorporating such herbicides are in the form of aqueous solutions. These solutions commonly comprise at least one surfactant, the function of this surfactant being to act as a wetting agent to facilitate absorption of the composition into the target plant. One important requirement is that the surfactant be soluble in the aqueous solution. This has been hard to achieve as most surfactants which are otherwise desirable for use in the compositions are not composition-soluble to a sufficient extent.

There has recently been interest in the use of alkyl glucosides as surfactants in herbicidal compositions. An alkyl glucoside is the reaction product of glucose with an alkanol. The commercially-available alkyl glucosides are commonly made using not a single alkanol but a blend of synthetic alkanols, commonly having 8 to 10 carbon atoms. The proportion of alkyl groups present in the glucoside may be regulated, a typical proportion being 1:2 (that is, one mole of alkyl per two moles of glucose).

It has now been found, surprisingly, that the combination in a composition of an N-(phosphonomethyl)glycine herbicide with one of a particular group of alkyl glucosides gives a composition which is not only a completely homogeneous solution, but which is also unexpectedly efficacious in use. There is therefore provided, according to the present invention, a herbicidal composition comprising an aqueous solution of an N-(phosphonomethyl)glycine herbicide, the composition additionally comprising an effective quantity of at least one alkyl glucoside, the alkyl glucoside having an alkyl: glucose molar ratio of from 1:1.3 to 1:1.6.

The alkyl glucosides for use in this invention may be any suitable alkyl glucosides. They may be formed by the reaction of a single alkanol with glucose, or they may be formed by the reaction of a blend of such alkanols. A typical suitable alkyl glucoside is the reaction product of glucose with "Alfol" (trade mark) 810, a synthetic blend of C₈ - C₁₀ alkanols.

The alkyl: glucose ratio must lie within the region 1:1.3 - 1:1.6. It has been found that below 1:1:3 the alkyl glucoside is not soluble enough in the composition; indeed, if 1:1.3 is to be used, the proportion of N-(phosphonomethyl)glycine herbicide in the composition must be reduced. Above 1.6:1, it has been observed that the beneficial enhancement of herbicidal performance starts to drop off markedly. It has been found that 1:1.4 gives the best result and this is the preferred ratio.

It is permissible to use other surfactants in combination with the alkyl glucosides; these give compositions which are nearly as efficacious but do not cost as much as the alkyl glucosides. The use of other surfactants may thus be cost-effective in certain applications.

Typical examples of suitable surfactants are amine ethoxylates, for example, members of the "Teric" (registered trade mark) "M" series such as "Teric" 13M15, 16M15 and 12M15.

When a surfactant other than an alkyl glucoside is present, it should not constitute more than 40% by weight of the total weight of alkyl glucoside and additional surfactant. Preferably, the additional surfactant should not constitute more than 30% of the total weight. The alkyl glucoside itself should be present in the composition to the extent of from 20% to 45% by weight of the total weight of the non volatile constituents of the composition.

Other known additives such as antifoaming agents can be added to the compositions in art-recognised quantities.

The compositions are typically applied to plants by spraying. It has been observed that the compositions according to the invention are more efficacious than similar compositions which lie outside the limits of the present invention. The 1:1.4 alkyl glucoside confers particularly good properties. Moreover, these properties are essentially maintained in cold, wet weather, under which conditions other compositions show much reduced herbicidal activity.

The invention is further illustrated with reference to, but is not restrictedly, the following examples.

### Example 1

Preparation and comparative testing of a composition according to the invention;

A herbicide composition according to the invention was prepared by blending the following ingredients:

| | |
|---|---|
| N-(phosphonomethyl)glycine, (mono)trimethylsulphonium salt* | 480 g |
| alkyl glucoside** (1:1.4) | 168 g |
| "Teric"⁺ 13M15 surfactant | 72 g |
| water | to 1 litre |

| | |
|---|---|
| * The weight given is the weight of active ingredient present. | |
| ** prepared by the reaction of glucose with "Alfol" (trade mark) 810, a synthetic C₈-C₁₀ alcohol mixture. | |
| + trade mark | |

The composition was sprayed at rates of 0.5, 1.0 and 1.5 L/ha on to perennial pasture. At the same time, an identical preparation except for the replacement of the alkyl glucoside by an equal quatity of a 1:2 alkyl glucoside was also sprayed out. (The 1:2 alkyl glucoside used was "Alkadet" (trade mark) 15 ex ICI Australia). The sprayed areas were observed for control, this being assessed visually as a percentage of the grass area which had turned brown. The weather conditions generally prevailing throughout the testing period were cold and wet. The results were as follows:

| Days after treatment | Composition according to invention | | | 1:2 alkyl glucoside formulation | | |
|---|---|---|---|---|---|---|
| | 0.5 L/ha. | 1.0 L/ha. | 1.5 L/ha. | 0.5 L/ha. | 1.0 L/ha. | 1.5 L/ha. |
| 28 | 8 | 55 | 78 | 0 | 25 | 58 |
| 36 | 8 | 58 | 79 | 0 | 28 | 58 |

It can be seen that the composition according to the invention performs better than the composition which lies outside the invention.

### Example 2

Comparative testing of compositions according to the invention.

The experiment described in Example 1 was repeated with the compositions being joined by the glyphosate-based grass-killing preparation "Roundup" (ex Monsanto Co.). The weather conditions prevailing throughout the testing period were generally warmer and drier than those of Example 1. All compounds were applied at the rate of 0.75 L/ha. The results were assessed in the same manner as described in Example 1 and were as follows:

| Days after treatment | Composition according to the invention | 1:2 Alkyl Glucoside formulation | Commercial Glyphosate |
|---|---|---|---|
| 21 | 65 | 65 | 33 |
| 42 | 90 | 89 | 73 |
| 64 | 87 | 78 | 65 |

Several things are clear from these results. First of all, the effect of the weather and the remarkable efficacy of the compositions according to the invention in adverse conditions is clearly demonstrated in that the performance advantage achieved is in this example not so marked as that achieved in Example 1. Secondly, although the 1:2 alkyl glucoside formulation came close to the result of the composition according to the invention at the 42 day mark, it was appreciably poorer in performance at the 64 day mark - the composition according to the present invention was clearly superior in its prevention of the regrowth which took place between the 42 and 64 day marks. Finally, the composition according to the invention was clearly superior to a commercial product which has enjoyed considerable commercial success.

## Claims

1. A herbicidal composition comprising an aqueous solution of an N-(phosphonomethyl)glycine herbicide, the composition additionally comprising an effective quantity of at least one alkyl glucoside, the alkyl glucoside having an alkyl: glucose molar ratio of from 1:1.3 to 1:1.6.

2. A herbicidal composition according to claim 1, wherein the alkyl : glucose molar ratio is 1:1.4.

3. A herbicidal composition according to claim 1 or claim 2, wherein the alkyl glucoside comprises from 20-45% by weight of the total weight of non-volatile constituents of the composition.

4. A herbicidal composition according to any one of claims 1-3, wherein the composition comprises at least one other surfactant.

5. A herbicidal composition according to claim 4 wherein the other surfactant comprises 40% maximum by weight of the total weight of surfactant of the composition.

6. A herbicidal composition according to claim 4, wherein the other surfactant comprises 30% maximum by weight of the total weight of the surfactant of the composition.

7. A herbicidal composition according to any of the preceding claims wherein the alkyl glucoside is formed by reaction of a C₈ to C₁₀ alkanol with glucose.

8. A method for the elimination of grasses which method comprises the application thereto of a herbicidal composition according to any one of claims 1-7.

## Patentansprüche

1. Herbicide Zusammensetzung, die eine wässerige Lösung eines N-(Phosphonomethyl)glycin-Herbicids enthält, wobei die Zusammensetzung außerdem eine wirksame Menge mindestens eines Alkylglucosids enthält, welches Alkylglucosid ein Alkyl:Glucose-Molverhältnis von 1:1,3 bis 1:1,6 aufweist.

2. Herbicide Zusammensetzung nach Anspruch 1, bei der das Alkyl:Glucose-Molverhältnis 1:1,4 beträgt.

3. Herbicide Zusammensetzung nach Anspruch 1 oder Anspruch 2, bei der das Alkylglucosid 20-45 Gew.% des Gesamtgewichts nichtflüchtiger Bestandteile der Zusammmensetzung ausmacht.

4. Herbicide Zusammensetzung nach einem der Ansprüche 1 bis 3, wobei die Zusammensetzung mindestens ein anderes grenzflächenaktives Mittel enthält.

5. Herbicide Zusammensetzung nach Anspruch 4, bei der das andere grenzflächenaktive Mittel maximal 40 Gew.% des Gesamtgewichts der grenzflächenaktiven Mittel der Zusammensetzung ausmacht.

6. Herbicide Zusammensetzung nach Anspruch 4, bei der das andere grenzflächenaktive Mittel maximal 30 Gew.% des Gesamtgewichts der grenzflächenaktiven Mittel der Zusammensetzung ausmacht.

7. Herbicide Zusammensetzung nach einem der vorhergehenden Ansprüche, wobei das Alkylglucosid durch die Umsetzung eines C₈ - C₁₀-Alkanols mit Glucose gebildet wird.

8. Verfahren zur Entfernung von Gräsern, bei dem darauf eine herbicide Zusammensetzung nach einem der Ansprüche 1 - 7 aufgebracht wird.

## Revendications

1. Composition herbicide comprenant une solution aqueuse d'un herbicide consistant en N-(phosphonométhyl)glycine, ladite composition comprenant en outre une quantité efficace d'au moins un alkyl-glucoside, l'alkyl-glucoside ayant un rapport molaire alkyle:glucose de 1:1,3 à 1:1,6.

2. Composition herbicide suivant la revendication 1, dans laquelle le rapport molaire alkyle:glucose est égal à 1:1,4.

3. Composition herbicide suivant la revendication 1 ou la revendication 2, dans laquelle l'alkyl-glucoside représente 20 à 45 % en poids du poids total des constituants non volatils de la composition.

4. Composition herbicide suivant l'une quelconque des revendications 1 à 3, qui comprend au moins un autre surfactant.

5. Composition herbicide suivant la revendication 4, dans laquelle l'autre surfactant représente au maximum 40 % en poids du poids total du surfactant de la composition.

6. Composition herbicide suivant la revendication 4, dans laquelle l'autre surfactant représente au maximum 30 % en poids du poids total du surfactant de la composition.

7. Composition herbicide suivant l'une quelconque des revendications précédentes, dans laquelle l'alkyl-glucoside est formé par réaction d'un alcanol en C₈ à C₁₀ avec le glucose.

8. Procédé pour éliminer des herbes, qui comprend l'application à ces herbes d'une composition herbicide suivant l'une quelconque des revendications 1 à 7.
